# EUROPEAN PATENT SPECIFICATION

(11) **EP 1 971 783 B1**
(45) Date of publication and mention of the grant of the patent: **23.02.2011**
(21) Application number: 05824282.7
(22) Date of filing: 15.12.2005
(51) Int. Cl.: F15B 15/28, F15B 20/00, F16D 25/12, F16D 48/02

(54) **METHOD FOR DETECTING CLUTCH CYLINDER LEAKAGE**
VERFAHREN ZUR ERFASSUNG EINER KUPPLUNGSZYLINDERLECKAGE
PROCEDE DE DETECTION DE FUITES SUR CYLINDRE D'EMBRAYAGE

(43) Date of publication of application: 24.09.2008
(73) Proprietor: Volvo Lastvagnar AB, 405 08 Göteborg (SE)
(72) Inventor: KARLSSON, Svante, S-426 53 Västra Frölunda (SE); KARLSSON, Lars, S-417 29 Göteborg (SE); LAURI, Erik, S-431 59 Mölndal (SE)
(74) Representative: Fröhling, Werner Otto
(86) International application number: PCT/SE2005/001945
(87) International publication number: WO 2007/069955

(56) References cited:
- EP-A2- 0 727 589
- EP-A2- 0 727 589
- DE-A1- 10 355 250
- DE-A1-102004 023 001
- FR-A1- 2 838 384
- GB-A- 1 477 609
- US-A- 5 758 758
- US-A- 5 778 753
- US-A1- 2003 125 841
- US-B2- 6 710 327

## Description

### FIELD OF THE INVENTION

The present invention relates to a method for sensing leakage in a clutch cylinder system in a vehicle comprising an automated manual transmission. The clutch cylinder system comprises a clutch cylinder provided with a reciprocable piston, whose position is sensed by a position sensor and affected by pressurization of said cylinder by opening or closing at least one air inlet valve and by opening or closing at least one air outlet valve and wherein the clutch is in an engaged position when there is no air pressure in said cylinder.

### PRIOR ART

In recent years, a new type of transmission system for trucks has come into widespread use, namely the so called Automatic Manual Transmission, or AMT. An AMT can basically be described as resembling an automatic transmission, but includes no torque converter. An AMT generally comprises an electronically controlled gearbox, and an electronically controlled clutch. There is no clutch pedal in the vehicle.

Usually, both the clutch and the gearbox are powered by compressed air. The electronic control system controls the amount and rate of compressed air entering and leaving control cylinders controlling the clutch and gearbox.

Usually, the clutch cylinder is provided with one large diameter and one small diameter inlet valve and one large diameter and one small diameter outlet valve. By controlling the valves, rapid or slow engagement and disengagement of the clutch can be achieved, partly by choosing which valve should be opened, partly by using different "duty cycles" for the valves, e.g. by pulse width modulation.

Usually, the clutch cylinder is provided with a position sensor for sensing the position of the clutch. This is an important feature, since it allows for a fast and precise control of the clutch position, and thereby the amount of torque the clutch can transfer, and further for adjustment.

During operation, the control system controlling the gearbox and clutch demands a clutch position. Responsive to the demand, the control system opens and closes the inlet and /or outlet valves to put the clutch cylinder in the demanded position.

One feature with such a system is that the system automatically compensates for leakages in the clutch cylinder or its air supply system. This feature is of course beneficial in that it is possible to continue to operate the vehicle. However, in many cases the driver of the vehicle will not notice a minor leakage and since a minor leakage might lead to a larger leakage, this non-notice of the leakage might pose a problem.

US2003/125841 discloses a method for sensing leakage in a cylinder system wherein the cylinder system comprises a cylinder provided with a reciprocable piston, whose position is sensed by a position sensor and affected by pressurization of said cylinder by opening or closing at least one air inlet valve and by opening or closing at least one air outlet valve, and where if a leak is detected an error signal is sent to a diagnostics system or a signal light.

DE102004023001 and FR2838384 disclose prior art examples of arrangements where in a clutch cylinder of a vehicle a leak is detected by sensing position of an actuator element when the clutch is not operated and if said position changes indicate a possible leakage.

### SUMMARY OF THE INVENTION

According to the present invention, the above problems are solved by a method for sensing leakage in a clutch cylinder system in a vehicle comprising an automated manual transmission. The clutch cylinder system comprises a clutch cylinder provided with a reciprocable piston, whose position is sensed by a position sensor and affected by pressurization of said cylinder by opening or closing at least one air inlet valve and by opening or closing at least one air outlet valve. The clutch is in an engaged position when there is no air pressure in said cylinder. The method steps of:
1. closing said at least one inlet valve and at least one outlet valve for compressed air;
2. sensing a position of said piston during a predetermined time span, and
3. if the position has changed more than a predetermined allowable position change, sending an error signal to an onboard diagnostics system or a signal light in the vehicle,
are performed at temperatures above a predetermined lowest air or gearbox temperature. Due to the fact that material shrinkage and loss of resilience make even flawless clutch cylinders leak at low temperatures, the method is only performed at temperatures above e. g. -25 degrees C.

Note that the cylinder could be pressurized or not pressurized during said above steps.

In a preferred embodiment of the invention, the method comprises the further steps of:
at least partly pressurizing the clutch cylinder prior to closing said at least one inlet valve and at least one outlet valve for compressed air and
if the position has changed more than a predetermined allowable position change in a negative direction, sending a second error signal to the onboard diagnostics system or the signal light in the vehicle, wherein the second error signal means there is a leakage in said clutch cylinder or the at least one air outlet valve.

By the above preferred embodiment of the invention, the, it is possible to determine leakage of pressurized air from the clutch cylinder or through the outlet valves.

In order to provide possibilities for rapid engagement and disengagement of the clutch, there could be two inlet valves and two outlet valves leading compressed air to and from the clutch cylinder, respectively.

In a preferred embodiment of the invention, the predetermined time is about 30 seconds and the predetermined allowable position change is about 20% of the distance between a fully engaged and a fully disengaged clutch.

In order to further increase the controllability of the clutch cylinder, one inlet valve could be larger than the other inlet valve. For the same reason, one outlet valve could be larger than the other outlet valve.

### BRIEF DESCRIPTION OF THE DRAWINGS

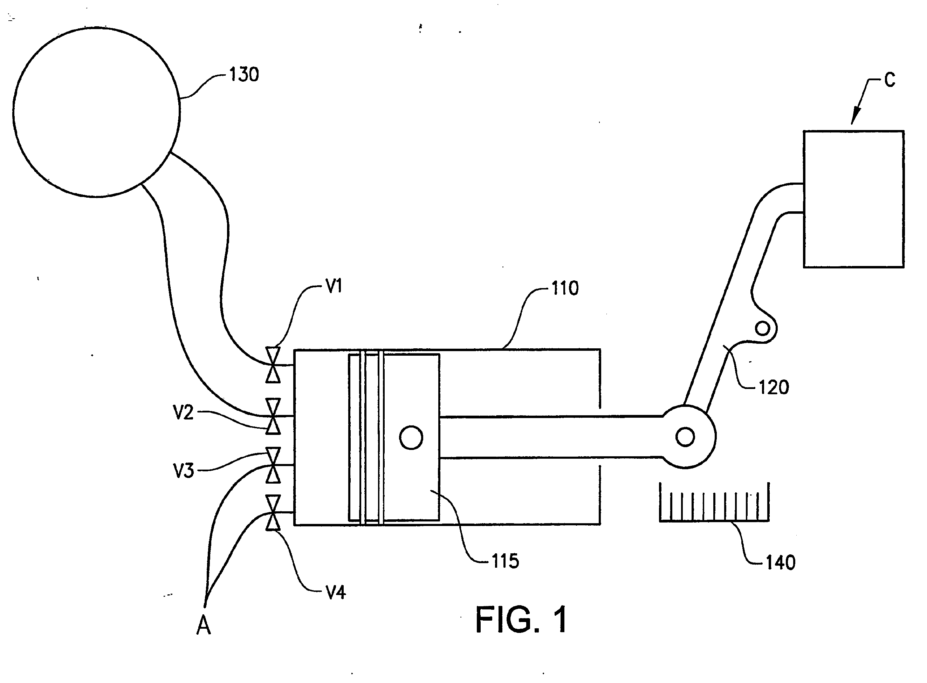

Hereinafter, the invention will be described with reference to the only drawing, Fig. 1, which schematically shows an exemplary clutch cylinder arrangement for which the claimed method could be used.

### DESCRIPTION OF PREFERRED EMBODIMENTS

With reference to Fig. 1, a clutch cylinder 110 having a piston 115 is connected, via a lever 120, to disengage a clutch C upon pressurization with compressed air from a source 130. The pressurization of the clutch cylinder 110 is controlled by four valves V1, V2, V3, V4, wherein the valve V1 is a large diameter inlet valve, valve V2 is a small diameter inlet valve, valve V3 is a large diameter outlet valve and valve V4 is a small diameter outlet valve. The valves V1 and V2 are arranged to control inlet of compressed air from the source 130 into the clutch cylinder 110. The valves V3 and V4 are used to control outflow of compressed air from the clutch cylinder to the atmosphere A. By the valves V1 V2, V3 and V4, it is possible to engage and disengage the clutch C slowly or rapidly, simply by controlling which valve that should be open; the fastest clutch disengagement is achieved by opening both inlet valves V1 and V2 simultaneously, a somewhat slower disengagement is achieved by opening only the large diameter inlet valve V2, an even slower disengagement by opening only the small diameter valve V2, and the slowest clutch disengagement by pulse width modulating the small diameter valve V2 to open and close periodically during one disengagement sequence.

The clutch can be engaged in a similar manner, but for engagement, the valves V3 and V4 are opened instead, wherein the fastest engagement is achieved by opening both the outlet valves V3 and V4, and the slowest engagement is achieved by pulse width modulation of the small diameter outlet valve V4 to open and close periodically during an engagement sequence.

As can be understood by persons skilled in the art, an increased pressure in the cylinder 110 biases the piston 115 to the right in Fig. 1. Oppositely, a decreased pressure in the cylinder 110 will make the piston 115 to move in the other direction, i.e. towards the left in Fig. 1, since the clutch C urges towards an engaged position; the engaged position is the resting position of the clutch.

A position sensor 140, e.g. of inductive type, is arranged to sense the position of the piston 115. By the position sensor, it is possible to adjust a disengagement stroke of the piston 115 responsive to clutch wear. In an exemplary embodiment of the invention, the piston stroke from fully engaged clutch to fully disengaged clutch is 25 mm. However, the position where the clutch is fully engaged, will move responsive to clutch wear. By the position sensor, it is possible to minimize the piston stroke from fully engaged clutch to fully disengaged clutch to 25 mm. Minimizing the piston stroke is advantageous from many points of view; firstly, air consumption is minimized and secondly, the necessary time for clutch engagement/disengagement is minimized.

The valves V1, V2, V3 and V4, and the position sensor 140 are connected to a controller (not shown). This controller might also be connected to one or more of an automated manual gearbox (not shown), a brake sensor (not shown) sensing a brake pedal position, a gas pedal sensor (not shown) sensing a gas pedal position, a speed sensor (not shown) sensing a vehicle speed, a temperature sensor (not shown) sensing outside temperature and an accelerometer (not shown) sensing vehicle acceleration. Responsive to information from these sensors, the controller orders a proper gear to the gearbox and a proper movement of the piston 115, in order to engage and disengage the clutch.

If a leakage of compressed air would occur, the system could be adapted for noticing this by a change in the ratio of the movement of the piston 115 versus the opening times of the valves V1-V4. Initial tests have however shown that it is difficult to make such a system to function in a very secure manner, since hysteresis effects in the system, e.g. from friction phenomena, make it very difficult to sense a leakage by a shift in the valve opening times vs. piston movement. Moreover, there are vehicle individual differences, like e.g. different compressed air pressures and clutch spring ratios due to wear, that affects the ratio of the movement of the piston 115 versus the opening times of the valves V1-V4.

According to the invention, leakage in the clutch cylinder system is detected by a monitoring clutch cylinder movement when all inlet and outlet air valves are closed.

According to the invention, a leakage test is performed at a certain rate, e.g. one time after each key-on. A first test, determining leakage in the inlet valves V1 and/or V2, could be carried out as follows:

In a first step, all valves V1-V4 are closed;
in a second step, the position of the piston 115 is monitored by the position sensor 140. Should the piston move more than a predetermined distance (e.g. 20% of the distance from a position corresponding to fully engaged clutch to a position corresponding to fully disengaged clutch) during a predetermined time span (e.g. 30 seconds), the controller determines that there is a leakage from the clutch cylinder 110.

In an optional step, used to determine leakage from the clutch cylinder 110 or through the outlet valves V3 and/or V4, the cylinder is at least partly pressurized prior to performing the above described first test.

In a preferred embodiment of the invention, the controller determines whether there is a leakage of air from the cylinder or into the cylinder by sensing the direction of the position change of the piston (115). The result is preferably stored in a memory in the controller, for subsequent readout at a service station or workshop. Such memories in, or in connection to, controllers, are generally referred to as onboard diagnostics systems, or OBD systems.

If the controller would determine that there is a leakage of compressed air from or into the clutch cylinder, the controller might transmit this in some different ways:

In a first transmittal embodiment, the controller might flash a signal light (not shown) on a dashboard of the vehicle. This may however not be advantageous, since warning lights on the dashboard generally means that the vehicle error which is signaled requires immediate attention. This is not the case for a minor clutch cylinder leakage.

In a second transmittal embodiment, the controller might save a clutch cylinder error code in an onboard diagnostic system (OBD system, not shown). The OBD system could be read out during a coming service at a workshop, and proper repair work, control or replacement of damaged parts could be conducted at the service.

At cold outside temperatures (e.g. below -20 degrees C), the clutch cylinder will leak air, even if there is no actual malfunction of the cylinder. This is due to the fact that material shrinkage and/or loss of gasket and sealing resilience occur at such low temperatures. In order not to receive any "false" determinations regarding clutch cylinder leakage, testing of clutch cylinder leakage could be discarded below temperatures of e.g. 0 degrees C.

In the description, the piston 115 acts upon the clutch C by the lever 120 in a so-called pull-type clutch arrangement. In some embodiments, the piston acts directly upon a clutch diaphragm spring onto which the pressure plate is attached, which is a so-called push-type clutch arrangement.

Moreover, the described embodiment uses four different valves V1-V4. This is however not necessary for carrying out the invention. In another embodiment, there is only one inlet valve and one outlet valve connected to the clutch cylinder 110.

As is obvious, there are many ways to embody the invention, which only should be limited by the scope of the appended claims.

## Claims

1. Method for sensing leakage in a clutch cylinder (110) system in a vehicle comprising an automated manual transmission, wherein the clutch cylinder system comprises a clutch cylinder (110) provided with a reciprocable piston (115), whose position is sensed by a position sensor (140) and affected by pressurization of said cylinder (110) by opening or closing at least one air inlet valve (V1, V2) and by opening or closing at least one air outlet valve (V3, V4) and wherein the clutch is in an engaged position when there is no air pressure in said cylinder, **characterized by** the steps of:
i. closing said at least one inlet valve (V1;V2) and at least one outlet valve (V3; V4) for compressed air;
ii. sensing a position of said piston (115) during a predetermined time span, and
iii. if the position has changed more than a predetermined allowable position change, sending an error signal to an onboard diagnostics system or a signal light in the vehicle,
are performed at temperatures above a predetermined lowest air or gearbox temperature.

2. The method of claim 1, comprising the further steps of:
at least partly pressurizing the clutch cylinder (110) prior to closing said at least one inlet valve (V1; V2) and at least one outlet valve (V3; V4) for compressed air and
if the position has changed more than a predetermined allowable position change in a negative direction, sending a second error signal to the onboard diagnostics system or the signal light in the vehicle, wherein the second error signal means there is a leakage in said clutch cylinder (110) or the at least one air outlet valve (V3; V4).

3. The method of any preceding claim, wherein there are provided two inlet valves (V1, V2) and two outlet valves (V3, V4) leading compressed air to and from the clutch cylinder (110), respectively.

4. The method of any of the preceding claims, wherein the predetermined allowable position corresponds to 20% of the distance between a first piston position wherein the clutch is fully engaged and a second position wherein the clutch is fully disengaged.

5. The method of any of the preceding claims, wherein one inlet valve (V1) is larger than the other inlet valve (V2).

6. The method of any of the preceding claims, wherein one outlet valve (V3) is larger than the other outlet valve (V4).

## Patentansprüche

1. Verfahren zur Erfassung einer Leckage in einem Kupplungszylindersystem (110) in einem Fahrzeug mit einem automatischen Handschaltgetriebe, wobei das Kupplungszylindersystem einen Kupplungszylinder (110) umfasst, der mit einem hin und her bewegbaren Kolben (115) versehen ist, dessen Position durch einen Positionssensor (140) erfasst und durch Unter-Druck-Setzung des Zylinders (110) durch Öffnen oder Schließen wenigstens eines Lufteinlassventils (V1, V2) und durch Öffnen oder Schließen wenigstens eines Auslassventils (V3, V4) beeinflusst wird, wobei die Kupplung sich in einer eingerückten Position befindet, wenn kein Luftdruck in dem Zylinder vorhanden ist,
**dadurch gekennzeichnet , dass** die Schritte
i. Schließen des wenigstens einen Einlassventils (V1; V2) und des wenigstens einen Auslassventils (V3; V4) für komprimierte Luft;
ii. Erfassen einer Position des Kolbens (115) während einer vorherbestimmten Zeitspanne, und
iii. Senden eines Fehlersignals an ein Borddiagnosesystem oder an ein Signallicht in dem Fahrzeug, wenn die Position sich um mehr als eine erlaubte Positionsveränderung verändert hat,
bei Temperaturen oberhalb einer vorherbestimmten niedrigsten Luft- oder Getriebetemperatur durchgeführt werden.

2. Verfahren nach Anspruch 1, mit den weiteren Schritten:
- wenigstens teilweises Unter-Druck-Setzen des Kupplungszylinders (110) vor dem Schließen des wenigstens einen Einlassventils (V1; V2) und des wenigstens einen Auslassventils (V3; V4) für komprimierte Luft und
- wenn sich die Position um mehr als eine vorherbestimmte erlaubte Positionsveränderung in einer negativen Richtung verändert hat, Senden eines zweiten Fehlersignals an das Borddiagnosesystem oder an das Signallicht in dem Fahrzeug, wobei der zweite Signalfehler bedeutet, dass eine Leckage in dem Kupplungszylinder (110) oder in dem wenigstens einen Auslassventil (V3; V4) vorliegt.

3. Verfahren nach einem vorhergehenden Anspruch, wobei zwei Einlassventile (V1, V2) und zwei Auslassventile (V3, V4) vorgesehen sind, die komprimierte Luft zu dem bzw. von dem Kupplungszylinder (110) weg führen.

4. Verfahren nach einem der vorhergehenden Ansprüche, wobei die vorherbestimmte erlaubte Position 20 % des Abstandes zwischen einer ersten Kolbenposition, in der die Kupplung vollständig eingerückt ist, und einer zweiten Position beträgt, in der die Kupplung vollständig ausgerückt ist.

5. Verfahren nach einem der vorhergehenden Ansprüche, bei dem ein Einlassventil (V1) größer als das andere Einlassventil (V2) ist.

6. Verfahren nach einem der vorhergehenden Ansprüche, bei dem ein Auslassventil (V3) größer als das andere Auslassventil (V4) ist.

## Revendications

1. Procédé pour détecter une fuite dans un système formant cylindre d'embrayage (110) d'un véhicule comprenant une transmission manuelle automatisée, le système formant cylindre d'embrayage comprenant un cylindre d'embrayage (110) muni d'un piston (115) se déplaçant avec un mouvement de va-et-vient, dont la position est détectée par un détecteur de position (140) et est affectée par une mise en pression dudit cylindre (110) par ouverture ou fermeture d'au moins un clapet d'admission d'air (V1, V2) et par ouverture ou fermeture d'au moins un clapet de refoulement d'air (V3, V4), l'embrayage étant dans une position de mise en prise lorsqu'il n'y a pas de pression d'air dans ledit cylindre,
**caractérisé par** les étapes consistant à:
i. fermer au moins un clapet d'admission (V1; V2) et au moins un clapet de refoulement (V3 ; V4) pour l'air comprimé ;
ii. détecter une position dudit piston (115) pendant un intervalle de temps prédéterminé, et
iii. si la position a changé davantage qu'un changement de position admissible prédéterminé, envoyer un signal d'erreur à un système de diagnostic embarqué ou à un voyant lumineux présent dans le véhicule,
qui sont effectuées à des températures supérieures à une température minimum prédéterminée d'air ou de boîte de vitesses.

2. Procédé selon la revendication 1, comprenant les étapes supplémentaires consistant à :
mettre au moins partiellement en pression le cylindre d'embrayage (110) préalablement à la fermeture desdits au moins un clapet d'admission (V1; V2) et au moins un clapet de refoulement (V3 ; V4) pour l'air comprimé et
si la position a changée davantage qu'un changement de position admissible prédéterminé dans une direction négative, envoyer un second signal d'erreur au système de diagnostic embarqué ou au voyant lumineux présent dans le véhicule, le second signal d'erreur signifiant qu'il y a une fuite dans ledit cylindre d'embrayage (110) ou ledit au moins un clapet de refoulement d'air (V3 ; V4).

3. Procédé selon l'une quelconque des revendications précédentes, dans lequel sont fournis deux clapets d'admission (V1, V2) et deux clapets de refoulement (V3, V4) dirigeant l'air comprimé vers et depuis le cylindre d'embrayage (110), respectivement.

4. Procédé selon l'une quelconque des revendications précédentes, dans lequel la position admissible prédéterminée correspond à 20 % de la distance comprise entre une première position de piston dans laquelle l'embrayage est complètement en prise et une seconde position dans laquelle l'embrayage n'est absolument pas en prise.

5. Procédé selon l'une quelconque des revendications précédentes, dans lequel un clapet admission (V1) est plus grand que l'autre clapet d'admission (V2).

6. Procédé selon l'une quelconque des revendications précédentes, dans lequel un clapet de refoulement (V3) est plus grand que l'autre clapet de refoulement (V4).
